(19) **Europäisches Patentamt / European Patent Office / Office européen des brevets**

(11) **EP 4 769 286 A1**

(12) **EUROPEAN PATENT APPLICATION**
published in accordance with Art. 153(4) EPC

(43) Date of publication:
**01.07.2026 Bulletin 2026/27**

(21) Application number: **25863973.1**

(22) Date of filing: **02.09.2025**

(51) International Patent Classification (IPC):
*G06Q 50/06* (2024.01)      *G01W 1/00* (2006.01)
*G06Q 10/04* (2023.01)      *G06F 17/18* (2006.01)
*G06F 16/901* (2019.01)      *G06F 16/9032* (2019.01)

(52) Cooperative Patent Classification (CPC):
G01W 1/00; G06F 16/901; G06F 16/9032;
G06F 17/18; G06Q 10/04; G06Q 50/06

(86) International application number:
**PCT/KR2025/013478**

(87) International publication number:
**WO 2026/054471 (12.03.2026 Gazette 2026/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.09.2024 KR 20240121712**

(71) Applicant: **LG Energy Solution, Ltd.**
**Seoul 07335 (KR)**

(72) Inventors:
• **PARK, Chang Kyun**
**Daejeon 34122 (KR)**

• **KIM, Hyun Tae**
**Daejeon 34122 (KR)**
• **YUN, Seong Han**
**Daejeon 34122 (KR)**
• **CHOI, Yong Jin**
**Daejeon 34122 (KR)**
• **LEE, Sung Il**
**Daejeon 34122 (KR)**
• **JIN, A Rim**
**Daejeon 34122 (KR)**
• **SHIN, Chang Ho**
**Daejeon 34122 (KR)**

(74) Representative: **BCKIP Part mbB**
**Landsberger Straße 98**
**80339 München (DE)**

(54) **ENERGY ANALYSIS DEVICE AND ENERGY ANALYSIS METHOD**

(57)    According to some embodiments, an energy analysis device includes a processor and a memory configured to store instructions that, when executed by the processor, cause the processor to perform operations including an operation of calculating a resource amount at an analysis target time point by summing wind speed values of dates that fall within a first analysis period having the analysis target time point as an end point based on wind data of an analysis target region, an operation of calculating past-year resource amounts corresponding to past years that fall within a second analysis period having the analysis target time point as an end point, and an operation of calculating a wind resource index at the analysis target time point based on the resource amount at the analysis target time point and the past-year resource amounts.

FIG.10

**Description**

## TECHNICAL FIELD

CROSS-REFERENCE TO RELATED APPLICATIONS

This application claims priority from Korean Patent Application No. 10-2024-0121712, filed on September 6, 2024, the disclosure of which is incorporated by reference herein.

TECHNICAL FIELD

Embodiments disclosed herein relate to an energy analysis device and an energy analysis method.

## BACKGROUND ART

Wind corresponds to an intermittent renewable energy source and may be used as a resource for wind power generation. The characteristics of wind may be quantified in terms of wind speed and wind direction. There have been several attempts to quantify wind as a concept of resource amount using wind speed, but there have been limitations in quantitatively, objectively, and intuitively expressing the relative amount of resources. For example, even when an average wind speed on a specific date of this year is relatively high compared to that of other years, when an average wind speed on a next day is relatively low, it may be difficult to objectively determine whether the year's wind resources are abundant from the perspective of resource amount.

## DISCLOSURE OF THE INVENTION

### TECHNICAL PROBLEM

One of the objects of the embodiments disclosed herein is to provide an energy analysis device and an energy analysis method capable of quantitatively, objectively, and intuitively expressing a relative resource amount of wind from the perspective of wind power generation resources.

The technical objectives of the embodiments disclosed herein are not limited to those mentioned above, and other technical objectives not mentioned will be clearly understood by those skilled in the art from the following descriptions.

### TECHNICAL SOLUTION

According to some embodiments, an energy analysis device includes a processor and a memory configured to store instructions that, when executed by the processor, cause the processor to perform operations including an operation of calculating a resource amount at an analysis target time point by summing wind speed values of dates that fall within a first analysis period having the analysis target time point as an end point based on wind data of an analysis target region, an operation of calculating past-year resource amounts corresponding to past years that fall within a second analysis period having the analysis target time point as an end point, and an operation of calculating a wind resource index at the analysis target time point based on the resource amount at the analysis target time point and the past-year resource amounts.

According to some embodiments, the operation of calculating the wind resource index may include an operation of calculating a climatic average resource amount at the analysis target time point based on an average of the resource amount at the analysis target time point and the past-year resource amounts and an operation of calculating the wind resource index based on the climatic average resource amount.

According to some embodiments, the operation of calculating the wind resource index may include an operation of calculating a resource amount deviation at the analysis target time point by subtracting the climatic average resource amount from the resource amount at the analysis target time point and an operation of calculating the wind resource index based on the resource amount deviation.

According to some embodiments, the operation of calculating the wind resource index may include an operation of calculating past-year resource amount deviations corresponding to past years that fall within the second analysis period, an operation of calculating a climatic average deviation at the analysis target time point based on a mean of the resource amount deviation at the analysis target time point and the past-year resource amount deviations, and an operation of calculating the wind resource index based on the climatic average deviation.

According to some embodiments, the operation of calculating the wind resource index may include an operation of calculating a standard deviation of the resource amount deviation at the analysis target time point and the past-year resource amount deviations based on the climatic average deviation and an operation of calculating the wind resource index based on the standard deviation.

According to some embodiments, the operation of calculating the wind resource index may include an operation of calculating the wind resource index based on a value obtained by dividing the resource amount deviation at the analysis target time point by the standard deviation.

According to some embodiments, the first analysis period may be set to correspond to a length of any one of seasons of the analysis target region.

According to some embodiments, the operations may further include an operation of classifying the wind resource index into sections and displaying a relative resource amount of the analysis target region.

According to some embodiments, an energy analysis method includes calculating a resource amount at an analysis target time point by summing wind speed values of dates that fall within a first analysis period having the analysis target time point as an end point based on wind data of an analysis target region, calculating past-year resource amounts corresponding to past years that fall within a second analysis period having the analysis target time point as an end point, and calculating a wind resource index at the analysis target time point based on the resource amount at the analysis target time point and the past-year resource amounts.

According to some embodiments, the calculating of the wind resource index may include calculating a climatic average resource amount at the analysis target time point based on an average of the resource amount at the analysis target time point and the past-year resource amounts and calculating the wind resource index based on the climatic average resource amount.

According to some embodiments, the calculating of the wind resource index may include calculating a resource amount deviation at the analysis target time point by subtracting the climatic average resource amount from the resource amount at the analysis target time point and calculating the wind resource index based on the resource amount deviation.

According to some embodiments, the calculating of the wind resource index may include calculating past-year resource amount deviations corresponding to past years that fall within the second analysis period, calculating a climatic average deviation at the analysis target time point based on a mean of the resource amount deviation at the analysis target time point and the past-year resource amount deviation, and calculating the wind resource index based on the climatic average deviation.

According to some embodiments, the calculating of the wind resource index may include calculating a standard deviation of the resource amount deviation at the analysis target time point and the past-year resource amount deviations based on the climatic average deviation and calculating the wind resource index based on the standard deviation.

According to some embodiments, the calculating of the wind resource index may include an operation of calculating the wind resource index based on a value obtained by dividing the resource amount deviation at the analysis target time point by the standard deviation.

According to some embodiments, the first analysis period may be set to correspond to a length of any one of seasons of the analysis target region.

According to some embodiments, the energy analysis method may further include classifying the wind resource index into sections and displaying a relative resource amount of the analysis target region.

According to some embodiments, a computer program stored in a computer-readable medium stores instructions that, when executed by a processor, cause the processor to perform operations including an operation of calculating a resource amount at an analysis target time point by summing wind speed values of dates that fall within a first analysis period having the analysis target time point as an end point based on wind data of an analysis target region, an operation of calculating past-year resource amounts corresponding to past years that fall within a second analysis period having the analysis target time point as an end point, and an operation of calculating a wind resource index at the analysis target time point based on the resource amount at the analysis target time point and the past-year resource amounts.

According to some embodiments, the operation of calculating the wind resource index may include an operation of calculating a climatic average resource amount at the analysis target time point based on an average of the resource amount at the analysis target time point and the past-year resource amounts and an operation of calculating the wind resource index based on the climatic average resource amount.

According to some embodiments, the operation of calculating the wind resource index may include an operation of calculating a resource amount deviation at the analysis target time point by subtracting the climatic average resource amount from the resource amount at the analysis target time point and an operation of calculating the wind resource index based on the resource amount deviation.

According to some embodiments, the operation of calculating the wind resource index may include an operation of calculating past-year resource amount deviations corresponding to past years that fall within the second analysis period, an operation of calculating a climatic average deviation at the analysis target time point based on a mean of the resource amount deviation at the analysis target time point and the past-year resource amount deviations, and an operation of calculating the wind resource index based on the climatic average deviation.

## ADVANTAGEOUS EFFECTS

According to the embodiments disclosed herein, it is possible to provide an energy analysis device and an energy analysis method capable of quantitatively, objectively, and intuitively expressing a relative resource amount of wind from the perspective of wind power generation resources.

The technical effects according to the embodiments disclosed herein are not limited to those mentioned above, and other effects not mentioned will be clearly understood by those skilled in the art from the disclosure herein.

## BRIEF DESCRIPTION OF THE DRAWINGS

FIG. 1 illustrates a method in which an energy analysis device according to some embodiments operates.
FIG. 2 illustrates elements constituting the energy analysis device according to some embodiments.
FIG. 3 illustrates a conventional method for estimating a wind resource amount based on daily wind speed data.
FIG. 4 illustrates a method for calculating a wind resource index using the energy analysis device according to some embodiments.
FIG. 5 illustrates a specific process for calculating a wind resource index based on wind data according to some embodiments.
FIGS. 6 to 8 illustrate graphs showing daily wind speed data, resource amounts, and wind resource indices according to some embodiments.
FIG. 9 illustrates a table in which a wind resource index is classified into sections to indicate relative resource amounts according to some embodiments.
FIG. 10 illustrates steps constituting an energy analysis method according to some embodiments.

## MODE FOR CARRYING OUT THE INVENTION

Hereinafter, embodiments disclosed in herein will be described with reference to the accompanying drawings. However, this is not intended to limit the disclosure herein to the specific embodiments, and it is to be construed to include various modifications, equivalents, and/or alternatives of embodiments disclosed herein.

It should be appreciated that embodiments of the present disclosure and the terms used therein are not intended to limit the technological features set forth herein to a particular embodiment and include various changes, equivalents, or replacements in corresponding embodiments. With regard to the description of the drawings, similar or related reference numerals may be used to refer to similar or related elements. It is to be understood that a singular form of a noun corresponding to an item may include one or more of the things, unless the relevant context clearly indicates otherwise.

As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," "first," "second," "A." "B," "(a)," or "(b)" may be used to simply distinguish a corresponding component from another, and do not limit the components in other aspects (e.g., importance or order) unless specifically stated otherwise.

In the present specification, it is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., a compact disc read only memory and CD-ROM), or be distributed (e.g., downloaded or uploaded) online via an application store, or between two operator devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the plurality of entities may be disposed separately from other components. According to embodiments disclosed herein, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

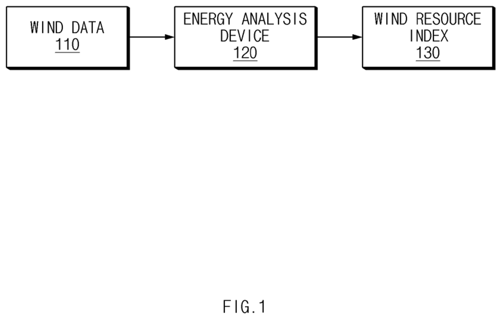

FIG. 1 illustrates a method in which an energy analysis device according to some embodiments operates.

Referring to FIG. 1, an energy analysis device 120 may analyze wind data 110 and calculate a wind resource index 130 corresponding thereto. The operation of the energy analysis device 120 may be implemented in the form of a computer program, a mobile application, or the like. The energy analysis device 120 may perform an analysis process by executing the program and/or app.

The wind data 110 may be data on wind power measured in an analysis target region. The wind data 110 may include wind direction and wind speed periodically collected at each of wind measurement locations. For example, the wind data 110 may include daily wind speed values representing wind speed values measured over a day at each wind measurement location. For example, the wind data 110 may be data recorded in a wind resource map of the Korea Meteorological Administration, and a database other than this may be utilized as the wind data 110.

The wind resource index 130 may relatively express the amount of the wind resource in the analysis target region and at an analysis target time point. The wind resource index 130 may numerically express a relative amount of wind resources. When values of the wind resource index 130 corresponding to a plurality of analysis target regions are calculated, the amount of wind resources may be compared based on the size of the values. According to the embodiment, the energy analysis device 120 may display the locations of the plurality of analysis target regions and the values of the wind resource index 130 on the map, and the values of the wind resource index 130 may be displayed on the map in a visual form, such as shading, color, or the like.

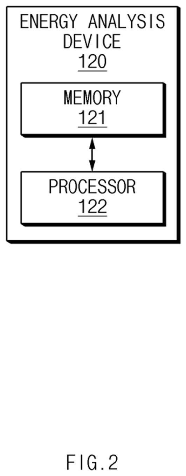

FIG. 2 illustrates elements constituting the energy analysis device according to some embodiments.

Referring to FIG. 2, the energy analysis device 120 may include a memory 121 and a processor 122. However, the energy analysis device is not limited thereto, and some components may be omitted from the energy analysis device 120, and other components may be further included in the energy analysis device 120.

The processor 122 may have a structure for executing instructions that implement operations of the energy analysis device 120. The processor 122 may be implemented as an array of a number of logic gates for processing various operations or as a general-purpose microprocessor, and may consist of a single processor or a plurality of processors. For example, the processor 122 may be implemented in the form of at least one of a microprocessor, a central processing unit (CPU), a graphics processing unit (GPU), and an application processor (AP).

The processor 122 may operate together with the memory 121 configured to store various data, instructions, mobile applications, computer programs, and the like. The memory 121 may be configured separately from or integrally with the processor 122. The memory 121 may store instructions of a computer program and/or a mobile application, and the processor 122 may process various operations by executing instructions stored in the memory 121. For example, the memory 121 may be implemented in a form of a non-volatile device such as a read-only memory (ROM), a programmable ROM (PROM), an erasable programmable ROM (EPROM), an electrically erasable PROM (EEPROM), a flash memory, a parallel random-access memory (PRAM), a magneto-resistive RAM (MRAM), a resistive RAM (RRAM), a ferroelectric RAM (FRAM), or the like, or a volatile device such as a dynamic RAM (DRAM), a static RAM (SRAM), a synchronous dynamic RAM (SDRAM), a parallel RAM (PRAM), or the like, or may be implemented in a form of a hard disk drive (HDD), a solid state drive (SSD), a secure digital (SD), Micro-SD, or a combined form thereof.

The processor 122 may be configured to, by executing the instructions stored in the memory 121, calculate a resource amount at an analysis target time point by summing wind speed values of dates that fall within a first analysis period having the analysis target time point as an end point based on the wind data 110 of the analysis target region. For example, the first analysis period may be 90 days or 3 months. Wind speed values that fall within the 90-day or 3-month period having the analysis target time point as an end date may be used to calculate the resource amount. One wind speed value may correspond to one date. For example, an average of periodically collected wind speed values over one day may be used as one wind speed value per day. For example, the analysis target region may be any one of the wind measurement locations on the Korea Meteorological Administration's wind resource map. The resource amount may be defined as a total sum of wind speed values of the dates that fall within the first analysis period.

The processor 122 may be configured to, by executing the instructions stored in the memory 121, calculate past-year resource amounts corresponding to past years that fall within a second analysis period having the analysis target time point as an end point. For example, the second analysis period may be 30 years. The 30-year period may be a time scale recommended by the World Meteorological Organization (WMO) for climate research. For example, when the analysis target time point is June 30, 2030, the first analysis period may be from March 1 to June 30. When the second analysis period is 30 years, in addition to a current year resource amount calculated for the period from March to June 2030, past-year resource amounts for the periods of March to June 2001, March to June 2002, March to June 2003, ..., March to June 2029 may be calculated.

The processor 122 may be configured to, by executing instructions stored in the memory 121, calculate the wind resource index 130 at the analysis target time point based on the resource amount at the analysis target time point and the past-year resource amounts. For example, when the analysis target time point is June 30, 2030, the first analysis period is 3 months, and the second analysis period is 30 years, in addition to the resource amount calculated for March to June 2030, resource amounts for 29 past years from 2001 to 2029 may be calculated, and based on the total of 30 resource amounts, the wind resource index 130 of the analysis target region may be calculated.

According to the embodiment, an operation of calculating the wind resource index may include an operation of calculating a climatic average resource amount at the analysis target time point based on an average of the resource amount at the analysis target time point and the past-year resource amounts and an operation of calculating the wind resource index based on the climatic average resource amount. For example, when the analysis target time point is June 30, 2030, the first analysis period is 3 months, and the second analysis period is 30 years, the average of 30 resource amounts may be the climatic average resource amount at the analysis target time point. This may be a value obtained by averaging the resource amounts for the first analysis period over the second analysis period.

According to the embodiment, the operation of calculating the wind resource index may include an operation of calculating a resource amount deviation at the analysis target time point by subtracting the climatic average resource amount from the resource amount at the analysis target time point and an operation of calculating the wind resource index based on the resource amount deviation. For example, when the analysis target time point is June 30, 2030, the first analysis period is 3 months, and the second analysis period is 30 years, the resource amount deviation may be calculated by subtracting the climatic average resource amount corresponding to the 30-year average from the resource amount at the analysis target time point in 2030. In addition to the current year 2030, resource amount deviations may be calculated in the same manner for past years 2001 to 2029. That is, 30 resource amount deviations may be calculated based on the average resource amount and 30 resource amounts.

According to the embodiment, the operation of calculating the wind resource index may include an operation of calculating past-year resource amount deviations corresponding to past years that fall within the second analysis period, an operation of calculating a climatic average deviation at the analysis target time point based on a mean of the resource amount deviation at the analysis target time point and the past-year resource amount deviations, and an operation of calculating the wind resource index based on the climatic average deviation. For example, when the analysis target time point is June 30, 2030, the first analysis period is 3 months, and the second analysis period is 30 years, 30 resource amount deviations may be calculated based on the average resource amount of the 30 resource amounts. The climatic average deviation may be the mean of the 30 resource amount deviations.

According to the embodiment, the operation of calculating the wind resource index may include an operation of calculating a standard deviation of the resource amount deviation at the analysis target time point and the past-year resource amount deviations based on the climatic average deviation and an operation of calculating the wind resource index based on the standard deviation. For example, when the analysis target time point is June 30, 2030, the first analysis period is 3 months, and the second analysis period is 30 years, the standard deviation may be calculated based on differences between the 30 resource amount deviations and the climatic average deviation. A square of the standard deviation may be obtained by dividing squared differences between each of the 30 resource amount deviations and the climatic average deviation by 30.

According to the embodiment, the operation of calculating the wind resource index may include an operation of calculating the wind resource index based on a value obtained by dividing the resource amount deviation at the analysis target time point by the standard deviation. For example, the wind resource index may be a value obtained by dividing the resource amount deviation at the analysis target time point by a previously calculated standard deviation. The wind resource index may quantitatively, objectively, and intuitively express a relative wind resource amount of the analysis target region from the perspective of wind power generation resources.

According to the embodiment, the first analysis period may be set to correspond to a length of any one of the seasons of the analysis target region. For example, in a climate where the year consists of four seasons, a three-month period may be set as the first analysis period. This may allow analysis of the wind data 110 on a seasonal basis. According to the embodiment, the first analysis period may be adjusted to a period corresponding to an actual season length. For example, in cases where durations of the summer and winter periods are long or the like, the first analysis period may be set to be longer than 3 months/90 days.

According to the embodiment, the processor 122 may be configured to, by executing instructions stored in the memory 121, display a relative resource amount of the analysis target region by classifying the wind resource index into sections. A distribution of the wind resource index may have a similar pattern to a Gaussian normal distribution. Sections for classifying the wind resource index may be set to statistically significant values or intuitive values. According to the embodiment, the wind resource index may be displayed on a map together with a location of the analysis target region. According to the embodiment, the wind resource index may be expressed in the analysis target region on the map using black and white shading or color.

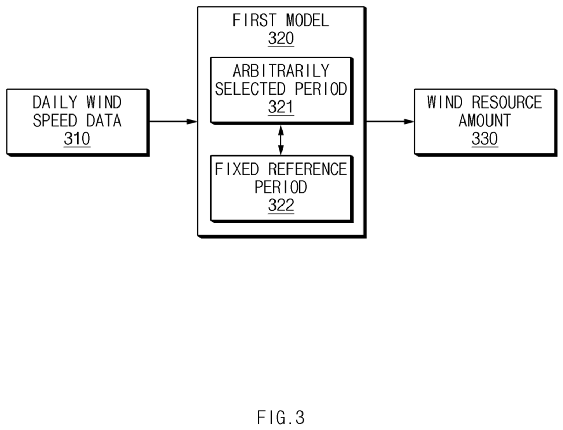

FIG. 3 illustrates a conventional method for estimating a wind resource amount based on daily wind speed data.

Referring to FIG. 3, the conventional method for estimating a wind resource amount based on daily wind speed data may be performed by a first model 320. The first model 320 may calculate a wind resource amount based on daily wind speed data 310.

In the first model 320 according to the conventional method, when calculating an average value, an accumulated value, or the like of wind speed, an arbitrarily selected period 321 arbitrarily selected by a researcher may be utilized, and the arbitrarily selected period 321 may not represent a meaningful climatic time scale. In addition, reference data for generating a control group that serves as a basis for comparison may be calculated based on a fixed reference period 322. That is, the period of reference data may be a fixed period regardless of when the analysis target time point is.

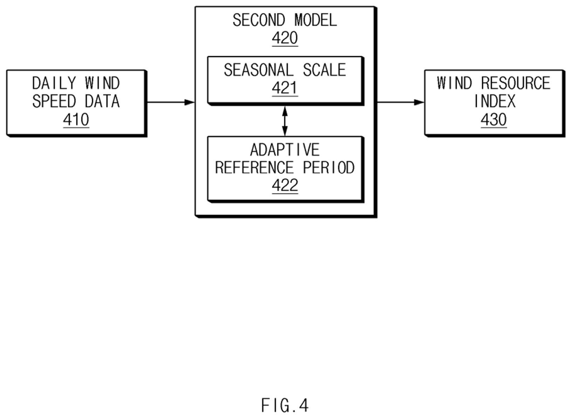

FIG. 4 illustrates a method for calculating a wind resource index using the energy analysis device according to some embodiments.

Referring to FIG. 4, the method for calculating a wind resource index 130 using the energy analysis device 120 may be performed using a second model 420. The second model 420 may calculate a wind resource index 430 based on daily wind speed data 410. The calculation of the wind resource index 430 may be performed through a series of equations.

In the case of the second model 420 by the energy analysis device 120, a time scale for calculating an average or accumulated value of wind speed values may be set to a seasonal scale 421. The seasonal scale 421 may correspond to the first analysis period, which may be 3 months or 90 days in a climate with four seasons per year, and may be adjusted to reflect an actual length of each season.

In addition, in the case of the second model 420 by the energy analysis device 120, the reference data for generating the control group that serves as the basis for comparison may be an adaptive reference period 422, and accordingly, start and end points of a period of the reference data may vary depending on an analysis target time point. Furthermore, the second model 420 may calculate the wind resource index 430, which, unlike the conventional model in which the wind resource amount is simply derived from deviation calculation, may quantitatively, objectively, and intuitively express a relative resource amount of wind.

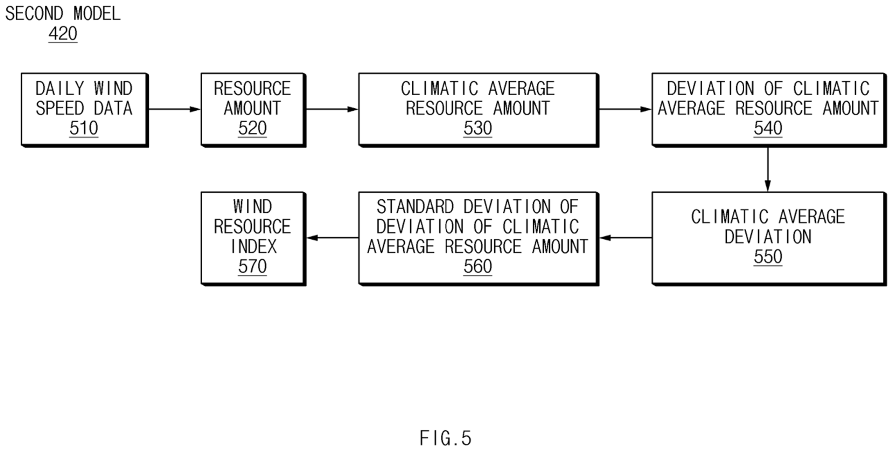

FIG. 5 illustrates a specific process for calculating a wind resource index based on wind data according to some embodiments.

Referring to FIG. 5, the specific process for calculating a wind resource index may be performed by the second model 420. The second model 420 may include equations, which are sequentially calculated.

The second model 420 may process daily wind speed data 510 to sequentially calculate a resource amount 520, a climatic average resource amount 530, a deviation 540, a climatic average deviation 550, a standard deviation 560, and a wind resource index 570.

[Equation 1]

$$ResourceAmount_t = \sum_{d=0}^{3months(90days)} WindSpeed_{t-d}$$

The resource amount 520 may be calculated according to Equation 1. When an analysis target time point is t, wind speed values for a period of 3 months or 90 days with t as an end point may be summed.

[Equation 2]

$$ClimaticAverageResourceAmount_t = \frac{1}{30} \sum_{y=yt}^{yt-29} ResourceAmount_t$$

The climatic average resource amount 530 may be calculated according to Equation 2. A second analysis period for calculating the climatic average resource amount 530 may be 30 years. The analysis target time point t may be composed of a year y (2030, 2029, ...) and a day d (1, 2, 3, ..., 365). The current year corresponding to the analysis target time point t may be denoted by yt. For the 30 years of the second analysis period, an average of the 30 resource amounts for the first analysis period (e.g., April 1 to June 30) may be calculated, and that value may be the climatic average resource amount 530.

[Equation 3]

$$Deviation_t = ResourceAmount_t - ClimaticAverageResourceAmount_t$$

The deviation 540 may be calculated according to Equation 3. Based on 30 values of the resource amounts 520 and the climatic average resource amount 530, 30 values representing the deviations 540 may be calculated.

7

[Equation 4]

$$ClimaticAverageDeviation_t = \frac{1}{30} \sum_{y=yt}^{yt-29} Deviation_t$$

The climatic average deviation 550 may be calculated according to Equation 4. The average of 30 values representing the deviations 540 may be calculated, and that value may be the climatic average deviation 550.

[Equation 5]

$$StandardDeviation_t = \sqrt{\frac{1}{30} \sum_{y=yt}^{yt-29} (Deviation_t - ClimaticAverageDeviation_t)^2}$$

The standard deviation 560 may be calculated according to Equation 5. The standard deviation 560 may be calculated based on differences between each of the 30 values of the deviations 540 and the climatic average deviation 550.

[Equation 6]

$$WindPowerResourceIndex_t = \frac{Deviation_t}{StandardDeviation_t}$$

The wind resource index 570 may be calculated according to Equation 6. The wind resource index 570 may be obtained by dividing the deviation 540 at the analysis target time point t by the standard deviation 560 at the analysis target time point t.

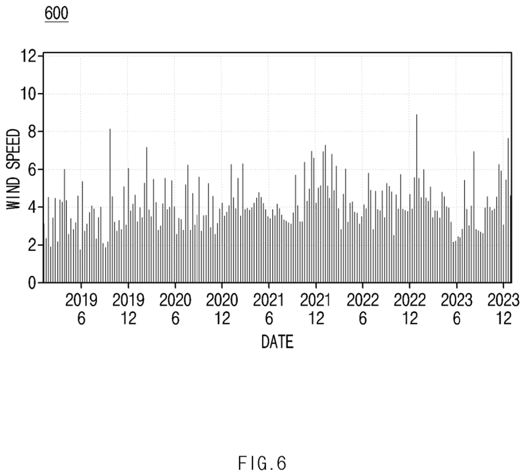

FIGS. 6 to 9 illustrate graphs showing daily wind speed data, resource amounts, and wind resource indices according to some embodiments.

Referring to FIG. 6, a graph 600 showing daily wind speed data may be illustrated. A horizontal axis of the graph 600 may indicate dates in one-day units, and a vertical axis may indicate wind speed. The unit of the wind speed indicated on the vertical axis may be m/s. For example, the daily wind speed data in the graph 600 may be based on a wind resource map provided by the Korea Meteorological Administration (KMA).

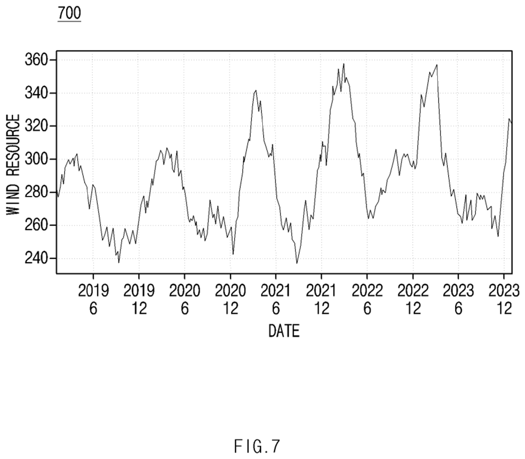

Referring to FIG. 7, a graph 700 showing resource amounts may be illustrated. A horizontal axis of the graph 700 may indicate dates in one-day units, and a vertical axis may indicate a wind resource amount representing sums of wind speed values during a first analysis period. For example, in order to represent seasonal characteristics, the first analysis period may be 3 months or 90 days, and the first analysis period may be adjusted to reflect an actual season length.

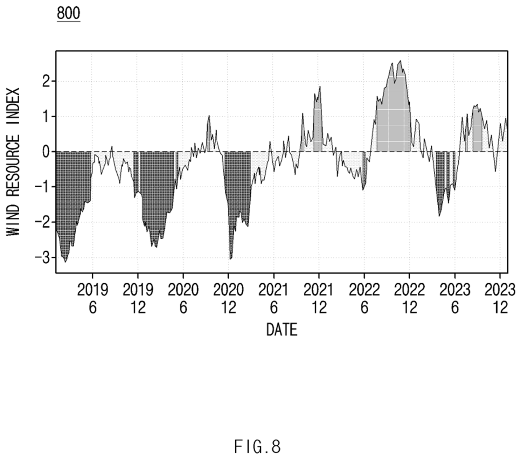

Referring to FIG. 8, a graph 800 showing wind resource indices may be illustrated. A horizontal axis of the graph 800 may indicate dates in one-day units, and a vertical axis may indicate wind resource indices by sequential mathematical operations. In contrast to the wind resource amount shown in the graph 700 of FIG. 7, which represents a non-intuitive value, the wind resource index may quantitatively, objectively, and intuitively express a relative resource amount of wind from the perspective of wind power generation resources.

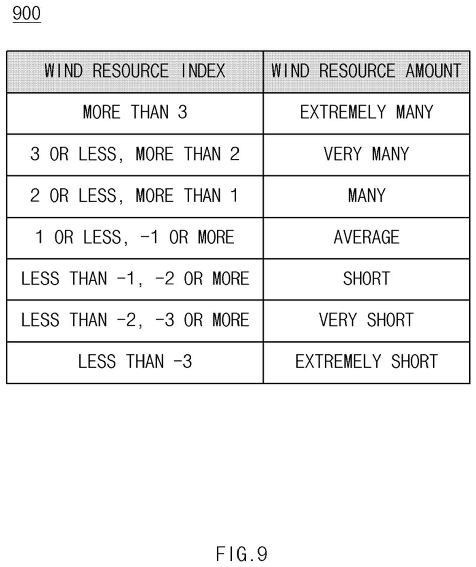

FIG. 9 illustrates a table in which a wind resource index is classified into sections to indicate relative resource amounts according to some embodiments.

Referring to FIG. 9, a table 900 may be illustrated in which the wind resource index is classified into sections to indicate relative resource amounts. In the table 900, a value of the wind resource index may be classified as one of seven sections.

The wind resource index may be expressed in a form similar to a standard value according to a Gaussian normal distribution. For example, when the wind resource index is 1.96, it may correspond to 95% of the total, and when the wind resource index is 2.58, it may correspond to 99% of the total. According to the embodiment, boundary values for classifying the wind resource index may be set to statistical values such as 1.96, 2.58, or the like. According to the embodiment, different colors or different black and white brightness values may be assigned to a plurality of sections for classifying the wind resource index, thereby allowing the size of the wind resource index to be visually expressed.

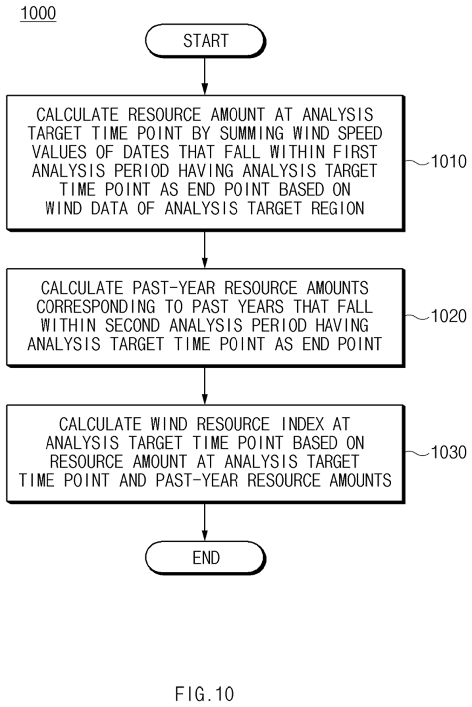

FIG. 10 illustrates steps constituting an energy analysis method according to some embodiments.

Referring to FIG. 10, an energy analysis method 1000 may include steps 1010 to 1030. However, the energy analysis method is not limited thereto, and some steps may be omitted or other general steps may be added, and the steps of the energy analysis method 1000 may be executed in a different order than the illustrated order.

The energy analysis method 1000 may include steps to be processed in a time series manner in the energy analysis device 120. Therefore, even when the content is omitted below, the content described above for the energy analysis device 120 may be equally applied to the energy analysis method 1000.

Steps 1010 to 1030 of the energy analysis method 1000 may be performed by the memory 121 and processor 122 of the energy analysis device 120.

In step 1010, the energy analysis device 120 may perform a step of calculating a resource amount at an analysis target time point by summing wind speed values of dates that fall within a first analysis period having the analysis target time point as an end point based on wind data of an analysis target region.

In step 1020, the energy analysis device 120 may perform a step of calculating past-year resource amounts corresponding to past years that fall within a second analysis period having the analysis target time point as an end point.

In step 1030, the energy analysis device 120 may perform a step of calculating a wind resource index at the analysis target time point based on the resource amount at the analysis target time point and the past-year resource amounts.

According to an embodiment, the energy analysis method 1000 may be implemented in the form of a computer program stored in a computer-readable storage medium. That is, the computer program may include instructions for implementing the energy analysis method 1000, and the instructions of the program may be stored in the computer-readable storage medium. The computer program may include a mobile application.

In an embodiment, a computer-readable storage medium may include magnetic media such as hard disks, floppy disks, and magnetic tapes, optical media such as CD-ROMs and DVDs, magneto-optical media such as floptical disks, and a hardware device specially configured to store and execute computer program instructions, such as ROM, RAM, flash memory, or the like. Computer program instructions may include machine language code generated by a compiler and high-level language code that may be executed by a computer using an interpreter, or the like.

Terms such as "include," "comprise," or "have" described above mean that the corresponding component may be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

**Claims**

1. An energy analysis device comprising:

   a processor; and
   a memory configured to store instructions that, when executed by the processor, cause the processor to perform operations including:

   an operation of calculating a resource amount at an analysis target time point by summing wind speed values of dates that fall within a first analysis period having the analysis target time point as an end point based on wind data of an analysis target region;
   an operation of calculating past-year resource amounts corresponding to past years that fall within a second analysis period having the analysis target time point as an end point; and
   an operation of calculating a wind resource index at the analysis target time point based on the resource amount at the analysis target time point and the past-year resource amounts.

2. The energy analysis device of claim 1, wherein the operation of calculating the wind resource index includes:

   an operation of calculating a climatic average resource amount at the analysis target time point based on an average of the resource amount at the analysis target time point and the past-year resource amounts; and

an operation of calculating the wind resource index based on the climatic average resource amount.

3. The energy analysis device of claim 2, wherein the operation of calculating the wind resource index includes:

an operation of calculating a resource amount deviation at the analysis target time point by subtracting the climatic average resource amount from the resource amount at the analysis target time point; and
an operation of calculating the wind resource index based on the resource amount deviation.

4. The energy analysis device of claim 3, wherein the operation of calculating the wind resource index includes:

an operation of calculating past-year resource amount deviations corresponding to past years that fall within the second analysis period;
an operation of calculating a climatic average deviation at the analysis target time point based on a mean of the resource amount deviation at the analysis target time point and the past-year resource amount deviations; and
an operation of calculating the wind resource index based on the climatic average deviation.

5. The energy analysis device of claim 4, wherein the operation of calculating the wind resource index includes:

an operation of calculating a standard deviation of the resource amount deviation at the analysis target time point and the past-year resource amount deviations based on the climatic average deviation; and
an operation of calculating the wind resource index based on the standard deviation.

6. The energy analysis device of claim 5, wherein the operation of calculating the wind resource index includes an operation of calculating the wind resource index based on a value obtained by dividing the resource amount deviation at the analysis target time point by the standard deviation.

7. The energy analysis device of claim 1, wherein the first analysis period is set to correspond to a length of any one of seasons of the analysis target region.

8. The energy analysis device of claim 1, wherein the operations further include an operation of classifying the wind resource index into sections and displaying a relative resource amount of the analysis target region.

9. An energy analysis method comprising:

calculating a resource amount at an analysis target time point by summing wind speed values of dates that fall within a first analysis period having the analysis target time point as an end point based on wind data of an analysis target region;
calculating past-year resource amounts corresponding to past years that fall within a second analysis period having the analysis target time point as an end point; and
calculating a wind resource index at the analysis target time point based on the resource amount at the analysis target time point and the past-year resource amounts.

10. The energy analysis method of claim 9, wherein the calculating of the wind resource index includes:

calculating a climatic average resource amount at the analysis target time point based on an average of the resource amount at the analysis target time point and the past-year resource amounts; and
calculating the wind resource index based on the climatic average resource amount.

11. The energy analysis method of claim 10, wherein the calculating of the wind resource index includes:

calculating a resource amount deviation at the analysis target time point by subtracting the climatic average resource amount from the resource amount at the analysis target time point; and
calculating the wind resource index based on the resource amount deviation.

12. The energy analysis method of claim 11, wherein the calculating of the wind resource index includes:

calculating past-year resource amount deviations corresponding to past years that fall within the second analysis period;

calculating a climatic average deviation at the analysis target time point based on a mean of the resource amount deviation at the analysis target time point and the past-year resource amount deviations; and
calculating the wind resource index based on the climatic average deviation.

13. The energy analysis method of claim 12, wherein the calculating of the wind resource index includes:

calculating a standard deviation of the resource amount deviation at the analysis target time point and the past-year resource amount deviations based on the climatic average deviation; and
calculating the wind resource index based on the standard deviation.

14. The energy analysis method of claim 13, wherein the calculating of the wind resource index includes an operation of calculating the wind resource index based on a value obtained by dividing the resource amount deviation at the analysis target time point by the standard deviation.

15. The energy analysis method of claim 9, wherein the first analysis period is set to correspond to a length of any one of seasons of the analysis target region.

16. The energy analysis method of claim 9, further comprising classifying the wind resource index into sections and displaying a relative resource amount of the analysis target region.

17. A computer program stored in a computer-readable medium that stores instructions that, when executed by a processor, cause the processor to perform operations comprising:

an operation of calculating a resource amount at an analysis target time point by summing wind speed values of dates that fall within a first analysis period having the analysis target time point as an end point based on wind data of an analysis target region;
an operation of calculating past-year resource amounts corresponding to past years that fall within a second analysis period having the analysis target time point as an end point; and
an operation of calculating a wind resource index at the analysis target time point based on the resource amount at the analysis target time point and the past-year resource amounts.

18. The computer program of claim 17, wherein the operation of calculating the wind resource index includes:

an operation of calculating a climatic average resource amount at the analysis target time point based on an average of the resource amount at the analysis target time point and the past-year resource amounts; and
an operation of calculating the wind resource index based on the climatic average resource amount.

19. The computer program of claim 18, wherein the operation of calculating the wind resource index includes:

an operation of calculating a resource amount deviation at the analysis target time point by subtracting the climatic average resource amount from the resource amount at the analysis target time point; and
an operation of calculating the wind resource index based on the resource amount deviation.

20. The computer program of claim 19, wherein the operation of calculating the wind resource index includes:

an operation of calculating past-year resource amount deviations corresponding to past years that fall within the second analysis period;
an operation of calculating a climatic average deviation at the analysis target time point based on a mean of the resource amount deviation at the analysis target time point and the past-year resource amount deviations; and
an operation of calculating the wind resource index based on the climatic average deviation.

WIND DATA
<u>110</u> → ENERGY ANALYSIS
DEVICE
<u>120</u> → WIND RESOURCE
INDEX
<u>130</u>

FIG.1

ENERGY ANALYSIS
DEVICE
120

MEMORY
121

PROCESSOR
122

FIG.2

FIRST MODEL
320

ARBITRARILY
SELECTED PERIOD
321

DAILY WIND
SPEED DATA
310

FIXED REFERENCE
PERIOD
322

WIND RESOURCE
AMOUNT
330

FIG.3

DAILY WIND
SPEED DATA
410

SECOND MODEL
420

SEASONAL SCALE
421

ADAPTIVE
REFERENCE PERIOD
422

WIND RESOURCE
INDEX
430

FIG.4

SECOND MODEL 420

DAILY WIND SPEED DATA 510 → RESOURCE AMOUNT 520 → CLIMATIC AVERAGE RESOURCE AMOUNT 530 → DEVIATION OF CLIMATIC AVERAGE RESOURCE AMOUNT 540 → CLIMATIC AVERAGE DEVIATION 550 → STANDARD DEVIATION OF DEVIATION OF CLIMATIC AVERAGE RESOURCE AMOUNT 560 → WIND RESOURCE INDEX 570

FIG.5

FIG.6

FIG.7

FIG.8

900

| WIND RESOURCE INDEX | WIND RESOURCE AMOUNT |
|---|---|
| MORE THAN 3 | EXTREMELY MANY |
| 3 OR LESS, MORE THAN 2 | VERY MANY |
| 2 OR LESS, MORE THAN 1 | MANY |
| 1 OR LESS, -1 OR MORE | AVERAGE |
| LESS THAN -1, -2 OR MORE | SHORT |
| LESS THAN -2, -3 OR MORE | VERY SHORT |
| LESS THAN -3 | EXTREMELY SHORT |

FIG.9

1000

```
           ┌─────────────┐
           │    START    │
           └──────┬──────┘
                  │
                  ▼
┌──────────────────────────────────────┐
│  CALCULATE RESOURCE AMOUNT AT ANALYSIS│
│ TARGET TIME POINT BY SUMMING WIND SPEED│      ～1010
│  VALUES OF DATES THAT FALL WITHIN FIRST│
│  ANALYSIS PERIOD HAVING ANALYSIS TARGET│
│     TIME POINT AS END POINT BASED ON   │
│    WIND DATA OF ANALYSIS TARGET REGION │
└──────────────────┬───────────────────┘
                   │
                   ▼
┌──────────────────────────────────────┐
│  CALCULATE PAST-YEAR RESOURCE AMOUNTS  │
│  CORRESPONDING TO PAST YEARS THAT FALL │      ～1020
│    WITHIN SECOND ANALYSIS PERIOD HAVING│
│   ANALYSIS TARGET TIME POINT AS END POINT│
└──────────────────┬───────────────────┘
                   │
                   ▼
┌──────────────────────────────────────┐
│     CALCULATE WIND RESOURCE INDEX AT   │
│   ANALYSIS TARGET TIME POINT BASED ON  │      ～1030
│    RESOURCE AMOUNT AT ANALYSIS TARGET  │
│  TIME POINT AND PAST-YEAR RESOURCE AMOUNTS│
└──────────────────┬───────────────────┘
                   │
                   ▼
           ┌─────────────┐
           │     END     │
           └─────────────┘
```

FIG.10

TRANSLATION

## INTERNATIONAL SEARCH REPORT

International application No.

**PCT/KR2025/013478**

### A. CLASSIFICATION OF SUBJECT MATTER

**G06Q 50/06**(2012.01)i; **G01W 1/00**(2006.01)i; **G06Q 10/04**(2012.01)i; **G06F 17/18**(2006.01)i; **G06F 16/901**(2019.01)i; **G06F 16/9032**(2019.01)i

According to International Patent Classification (IPC) or to both national classification and IPC

### B. FIELDS SEARCHED

Minimum documentation searched (classification system followed by classification symbols)

G06Q 50/06(2012.01); G01S 17/58(2006.01); G01W 1/00(2006.01); G06F 113/08(2020.01); G06F 30/20(2020.01); G06Q 10/06(2012.01); G06Q 10/10(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 에너지(energy), 풍력(wind power), 기간(duration), 지역(region), 자원량(resource amount), 풍력 자원 지수(wind resource index), 계산(calculation), 편차(deviation), 분석(analysis)

### C. DOCUMENTS CONSIDERED TO BE RELEVANT

| Category* | Citation of document, with indication, where appropriate, of the relevant passages | Relevant to claim No. |
|---|---|---|
| A | KR 10-2024-0131166 A (REPUBLIC OF KOREA (NATIONAL INSTITUTE OF METEOROLOGICAL SCIENCES)) 30 August 2024 (2024-08-30)<br>see paragraphs [10], [32], [45]. | 1-20 |
| A | KR 10-2019-0125233 A (KIM, Kyoung Soo et al.) 06 November 2019 (2019-11-06)<br>see paragraph [54]. | 1-20 |
| A | KR 10-2022-0020177 A (TITECHNOLOGY CO., LTD.) 18 February 2022 (2022-02-18)<br>see paragraphs [44], [45] and claims 1, 2. | 1-20 |
| A | KR 10-2024-0004039 A (INDUSTRY-ACADEMIC COOPERATION FOUNDATION, DANKOOK UNIVERSITY) 11 January 2024 (2024-01-11)<br>see paragraphs [29]-[34], [57]-[77]. | 1-20 |

[✓] Further documents are listed in the continuation of Box C.    [✓] See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 December 2025** | **02 December 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 769 286 A1**

## INTERNATIONAL SEARCH REPORT

International application No.

**PCT/KR2025/013478**

**C.    DOCUMENTS CONSIDERED TO BE RELEVANT**

| Category* | Citation of document, with indication, where appropriate, of the relevant passages | Relevant to claim No. |
|---|---|---|
| A | CN 112907146 A (XI'AN THERMAL POWER RESEARCH INSTITUTE CO., LTD.) 04 June 2021 (2021-06-04)<br>see claims 1-7. | 1-20 |
| A | 변효인 등. 풍력자원해석 및 에너지예측을 통한 풍력발전단지 설계 연구. 신재생에너지. June 2005, vol. 1, no. 2, pp. 19-25 (BYUN, Hyo In et al. The Study of the Wind Resource and Energy Yield Assessment for the Wind Park Development. Korean Society for New and Renewable Energy.)<br>see pages 22, 23. | 1-20 |

Form PCT/ISA/210 (second sheet) (July 2022)

### INTERNATIONAL SEARCH REPORT
**Information on patent family members**

International application No.

**PCT/KR2025/013478**

| Patent document cited in search report | | | Publication date (day/month/year) | Patent family member(s) | | | Publication date (day/month/year) |
|---|---|---|---|---|---|---|---|
| KR | 10-2024-0131166 | A | 30 August 2024 | KR | 10-2855739 | B1 | 08 September 2025 |
| KR | 10-2019-0125233 | A | 06 November 2019 | KR | 10-2019-0022156 | A | 06 March 2019 |
| | | | | KR | 10-2264786 | B1 | 16 June 2021 |
| KR | 10-2022-0020177 | A | 18 February 2022 | | None | | |
| KR | 10-2024-0004039 | A | 11 January 2024 | KR | 10-2877764 | B1 | 29 October 2025 |
| CN | 112907146 | A | 04 June 2021 | | None | | |

Form PCT/ISA/210 (patent family annex) (July 2022)

24

**EP 4 769 286 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240121712